# EUROPEAN PATENT APPLICATION

(11) **EP 1 150 136 A1**
(43) Date of publication of application: **31.10.2001**
(21) Application number: 00201510.5
(22) Date of filing: 27.04.2000
(51) Int. Cl.: G01T 1/29

(54) **Radiation image read out method and apparatus**

(71) Applicant: Agfa-Gevaert naamloze vennootschap, 2640 Mortsel (BE)
(72) Inventor: Tavernier, Stefaan, 1560 Hoeilaart (BE); Zanca, Federica, 45030 Santa Maria Magdalena, Rovigo (IT); Bruyndonckx, Peter, 3201 Langdorp (BE); Cresens, Marc, c/o Agfa-Gevaert N.V., Corp.IP3800, 2640 Mortsel (BE)

(57) **Abstract**

A compact apparatus for reading a radiation image that has been stored in a photostimulable phosphor screen comprises an array of transducer elements (4), e.g. avalanche photodiodes, and electronic circuitry (6) for integrating the signal of each of the transducer elements that are illuminated by the light emitted by a pixel of the screen upon stimulation of that pixel.

A light collecting assembly such as a concave cylindrical mirror with elliptical cross section (3), may be provided for guiding image-wise modulated light emitted by the phosphor upon stimulation onto the transducer array. A method for reading a radiation image is such an apparatus has been described.

## Description

### FIELD OF THE INVENTION

The present invention relates to a compact system for reading a radiation image that has been stored in a photostimulable phosphor screen. The present invention further relates to an improved radiation image read out method.

### BACKGROUND OF THE INVENTION

Radiation image recording systems wherein a radiation image is recorded on a photostimulable phosphor screen by exposing the screen to image-wise modulated penetrating radiation are widely used nowadays.

Examples of phosphors that are suitable for temporarily storing a radiation image are BaFBr:Eu phosphor, CsX:Eu phosphor wherein X represents a halide selected from a group consisting of Br and Cl etc.

The recorded image is reproduced by stimulating the exposed photostimulable phosphor screen by means of stimulating radiation and by detecting the light that is emitted by the phosphor screen upon stimulation and by converting the detected light into an electrical signal representation of the radiation image.

Commonly this read out is performed in a dedicated radiation image read out apparatus comprising a source of stimulating radiation such as a laser, means for raster scanning the screen by means of the light emitted by the laser and means for converting light emitted by the phosphor screen upon stimulation into a signal representation of the radiation image.

The raster scanning of the photostimulable phosphor screen is commonly obtained by deflecting the light beam emitted by the laser source into a first direction on the phosphor screen, this first direction being referred to as a main scan direction and by transporting the light source and the phosphor screen relative to eachother in a second direction, the so-called sub-scan direction.

The light emitted by the phosphor screen upon stimulation is commonly guided by a light guide member onto the light-to-signal conversion means (e.g. onto a photomultiplier) where the image-wise modulated light is converted into an electric signal representation of the image.

Such a light guide member for example consists of a bundle of juxtaposed optical fibres arranged in a line at the light input side and arranged in a form which is adapted to the light sensitive surface of the light-to-signal convertor at the light output side. Light entering a light guiding fibre is guided through internal reflection inside the fibre towards the output side where the light-to-signal convertor is placed.

Through the deflection of the light emitted by the laser source, picture elements of a line of the photostimulable phosphor screen are successively irradiated. The light which is emitted by the successively irradiated pixels is guided through one of the juxtaposed light fibres to the light sensitive surface of the light-to-signal convertor. The convertor generates in this way a time-varying signal that represents the light emitted by successively irradiated elements of the phosphor screen.

Light guide members however may take a lot of place within the read out apparatus and may consequentially have an important impact on the design and the dimensions of the read out apparatus.

Moreover, due to losses inside the light guiding member (e.g. inter fibre surface losses) and due to losses at the entrance and/or output window of the light guide, the optical efficiency of the system may be negatively influenced by the presence of a light guide.

### OBJECTS OF THE INVENTION

It is an object of the present invention to develop a compact read out apparatus which has a high collection efficiency.

Further objects will become apparent from the description below.

### SUMMARY OF THE INVENTION

The above mentioned objects are realised by an apparatus for reading a radiation image that has been stored in a photostimulable phosphor screen comprising
- a source of stimulating radiation,
- means for scanning said photostimulable phosphor screen by means of light emitted by said source of stimulating radiation,
- an array of transducer elements for converting light into a signal representation,
- means for integrating signal values output by individual transducer elements in correspondence to light emitted by an illuminated pixel of said photostimulable phosphor screen.

The design of the apparatus according to the invention can be made very compact. Very compact apparatus allow in situ read out of the radiographic image. In this way the operator can immediately check the image. Delays and possible handling errors would in this way be avoided.

Specific features for preferred embodiments of the invention are set out in the dependent claims.

In one embodiment the array of transducer elements is a one dimensional array of avalanche photodiodes.

The use of a read out system based on avalanche photodiodes and the absence of a light guiding member provides a readout system with a better light collection and a larger quantum efficiency than a read out system which is based on a photomultiplier tube and a light guide member consisting of optical fibres.

Avalanche diodes are presently available that have low dark current, and that have stable and reproducible properties.

The quantum efficiency of avalanche diodes is very high. Typically 70% at the wavelength of interest (390 nm).

In one embodiment the source of stimulating radiation and the array of transducer elements are provided on the same side of the photostimulable phosphor screen.

In another embodiment the phostimulable phosphor screen is a transparent screen. An (additional) array of transducer elements can then be placed on the opposite side of the screen relative to the side that is subjected to stimulation.

In either of these embodiments a filter can be provided in front of the transducer elements in order to avoid pick up by these elements of light of stimulating wavelength.

In one embodiment means are provided for directing light emitted by said screen upon stimulation onto an array of transducer elements.

One embodiment of such means comprises a concave cylindrical mirror with an elliptical cross section. The mirror is arranged so that one focal line coincides with a scanning line on said phosphor screen and a second focal line coincides with position of the array of transducer elements. With such an arrangement a very large fraction of the light emitted by the phosphor screen reaches the transducer elements.

The elliptical mirror preferably comprises a slit aperture through which a beam of stimulating radiation emitted by said source of stimulating radiation falls onto said screen.

Additional planar mirror can be placed at the outer sides of the cylindrical mirror in order to avoid loss of light towards the ends of the main scan line.

In another embodiment two arrays of transducer elements are used and the means for directing light emitted by said screen upon stimulation onto the arrays of transducer elements comprise a system of cylindrical lenses.

Cylindrical lenses focus on a single plane and are particularly suitable for use with a linear array of transducer elements, such as the above-mentioned array of avalanche photodiodes.

In order to reduce possible aberrations of the system due to marginal rays that are focussed outside the transducer array, a lens condenser is used. In the context of the present invention a lens condenser comprises an arrangement of two identical cylindrical lenses. Such a system is positioned on each side of the laser beam. The convex vertices of the lenses are in contact. The first lens works as a collimator while the second one is used to focalise the light onto an array of transducer elements.

Since this system requires the use of two arrays of transducer elements it is economically less attractive than the first embodiment using one array of traducer elements and a cylindrical mirror with elliptical cross section.

In still another embodiment according to the present invention more than one beam of stimulating radiation is used to scan parts of a scan line on the phosphor screen. The read out of these parts of het scan line is performed simultaneously. This embodiment provides fast read out.

Another aspect of the present invention relates to a method for reading a radiation image that has been stored in a photostimulable phosphor screen.

The method comprises the steps of scanning the screen by means of stimulating radiation, detecting light emitted by a pixel upon stimulation by means of an array of light-to-signal transducer elements. The method is characterised in that a signal representation of a pixel of the image that has been stored in the photostimulable phosphor screen is obtained by integrating the signals output by each of the elements of the transducer array in correspondence to the light emitted by that single pixel.

Further advantages and embodiments of the present invention will become apparent from the following description and drawings.

### BRIEF DESCRIPTION OF THE DRAWINGS

Fig. 1 schematically shows a photostimulable phosphor screen read out apparatus,
Fig. 2 comprising a cross sectional view of an elliptical mirror used for guiding light emitted by the phosphor screen upon stimulation onto an array of avanache photodiode elements.
Fig. 3 shows the relative location of an elliptical mirror assembly with respect to the photostimulable phosphor screen when it is in a position for read out,
Fig. 4 shows another embodiment of an apparatus according to the present invention, comprising a lens condenser arrangement.

### DETAILED DESCRIPTION OF THE INVENTION

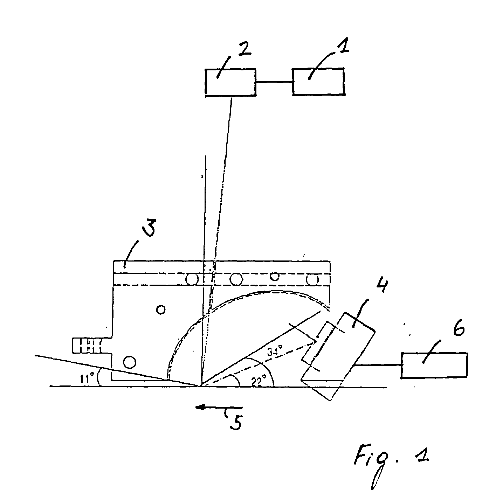

The read out apparatus schematically shown in figure 1 comprises a stimulating light source 1, e.g. a laser emitting light at a wavelength of 670 nm.

Light deflecting means 2, for example an oscillating galvanometric mirror device is provided for deflecting the laser beam emitted by light source 1 into a first so called main scan direction which is perpendicular to the plane of the drawing.

The laser light can be focussed by a suitable lens system (not shown) to obtain a spot diameter in the order of 100 micrometer.

A light collecting means 3 is further provided. This light collecting means will be described further on. It has a slit-like opening through which the deflected ray of laser light passes. The slit-like opening extends in the main scan direction perpendicular to the plane of the drawing. The width of the slit-like opening is about 1 mm, hereby avoiding scattering of the laser light by the mirror itself.

The read out section further comprises an array 4 of transducer elements arranged for detecting light emitted by the phosphor screen upon stimulation and for converting the detected light into an electric signal representation. Array 4 is a linear array likewise extending in a plane perpendicular to the plane of the drawing.

The linear array of transducer elements is composed of multiple accurately aligned avalance photodiodes each having a sensitive surface of about 15 x 3 mm. The array consists of a number of adjacent diodes aligned in the lond dimension and separated by a dead space of less than 1 mm.

Avalanche diodes are compact. Furthermore, they provide a high quantum efficiency, which is in between 60 and 80% at a wavelength of 390 nm. The dark currect of these diodes is very low (60 pA per mm2).

The apparatus further comprises means (for example an arrangement of driven rollers, not shown) for transporting a photostimulable phosphor screen in the direction of arrow 5.

The apparatus still further comprises electronic signal processing means 6. The output of the transducer elements of array 4 are coupled to the signal processing means 6. The output is digitized using a 14 bits analog-to-digital converted.

The processing means are programmed to integrate the input values into an output signal value representative of the light generated by an individual element of a scan line on the photostimulable phosphor screen upon stimulation and detected by each of the transducers of the array.

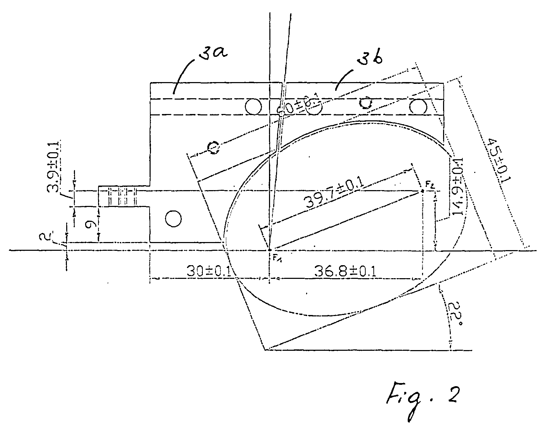

Figure 2 is a more detailed cross sectional view of the light collecting means. The light collecting means comprises a cylindrical mirror with elliptical cross section. It consists of an assembly having two sub-parts with elliptical cross section. The sub-parts are indicated by numerals 3a and 3b and furtheron referred to as reflector shells. The sub-parts are separated by a gap having a width of about 1 mm.

The points F1 anf F2 represent the focal points of a cross section of the in the plane of the drawing of both reflector shells. Both reflector shells are positioned relative to eachother in a way so that their focal points conincide.

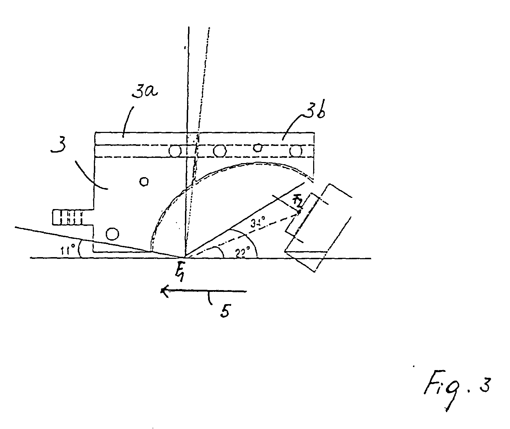

Figure 3 shows the relative location of this cylindrical mirror assembly with respect to the photostimulable phosphor screen when it is in a position for read out as well as with respect to the stimulating light source and the array of avalanche photodiodes.

The photostimulable phosphor screen is transported in a plane which is perpendicular to the plane. The focal line of the cylindrical mirror with elliptical cross section coincides with the scanning line of the laser on the photostimulable phosphor screen.

The operation of the device is as follows.

The laser light emitted by laser source 1 is deflected by deflecting means 2 in a plane which is perpendicular to the plane of the drawing and which extends in the direction of the elongate slit provided in between the subparts 3a and 3b of the cylindrical mirror assembly 3.

The laser light hits the photostimulable phosphor screen in focal point F1. Deflection of the laser beam in the main scan direction causes the generation of a scan line on the phosphor screen which conicides with the focal line of the cylindrical mirror.

A two-dimensional raster scan is obtained by transporting the phosphor screen in the sub-scan direction (direction indicated by arrow 5).

A pixel on the photostimulable phosphor screen which is stimulated by the light emitted by the laser source generates an amount of stimulated light. The stimulated light has been modulated by the x-ray image that was previously stored in the photostimulable phosphor screen.

Light emitted by an individual pixel on the screen extends in all directions. This light is reflected by the cylindrical mirror.

Since the point where the laser light hits the phosphor screen is situated in a first focal point (focal line in the two dimensional situation) of the elliptical cross section of the cylindrical mirror, all rays deflected by the mirror will coincide in the second focal point F2 (focal line in the two-dimensional situation).

The array of avalanche photodiodes is positioned in the second focal line of the cylindrical mirror.

Diffuse emission light emerging from the stimulation point in F1 will thus be intercepted over a wide spatial angle by both elliptical reflector shells 3a and 3b and re- directed towards point F2 where the avalanche photodiode array is positioned.

Signal processing means 6 are coupled to the array of transducer elements 4.

The light which is emitted by a single point of the phosphor screen, directed by the mirror onto all individual elements of the transducer array and converted into corresponding signal values by the transducer elements. These signal values are fed into signal processing means 6 and integrated and digitised. The result of this integration and digitisation represents the digital signal value corresponding with the image-wise modulated light in that specific point of the phosphor screen.

Since this operation is performed sequentially for all points of the phosphor screen a time varying signal is obtained which is a digital signal representation of the image that was stored in the screen.

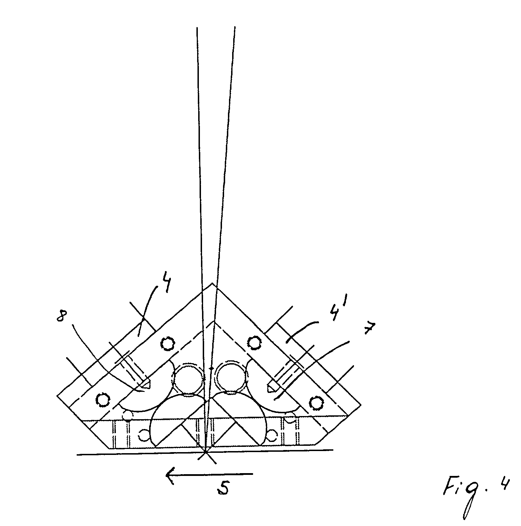

A second embodiment of the present invention is shown in figure 4. This system comprises a condenser lens system (7, 8) and two arrays of avalanche photodiodes 4 and 4'.

A lens condenser comprises an arrangement of two identical cylindrical lenses. Such a system is positioned on each side of the laser beam. The convex vertices of the lenses are in contact. The first lens works as a collimator while the second one is used to focalise the light onto an array of transducer elements.

Having described in detail preferred embodiments of the current invention, it will be apparent to those skilled in the art that numerous modifications can be made therein without departing from the scope of the invention as defined in the appending claims.

## Claims

1. An apparatus for reading a radiation image that has been stored in a photostimulable phosphor screen comprising
- a source of stimulating radiation,
- means for scanning said photostimulable phosphor screen by means of light emitted by said source of stimulating radiation,
- an array of transducer elements for converting light into a signal representation,
- means for integrating signal values output by individual transducer elements in correspondence to light emitted by an illuminated pixel of said photostimulable phosphor screen.

2. An apparatus according to claim 1 wherein said transducer elements are avalanche photo diodes.

3. An apparatus according to claims 1 or 2 comprising means for directing light emitted by a pixel that has been illuminated onto said array of transducer elements.

4. An apparatus according to claim 3 wherein said means for directing light emitted by said screen upon stimulation onto said array of transducer elements is a concave cylindrical mirror with elliptical cross section.

5. An apparatus according to claim 4 wherein said mirror is arranged so that one focal line coincides with a scanning line on said phosphor screen and a second focal line coincides with the position of the array of transducer elements.

6. An apparatus according to claim 4 wherein said mirror comprises a slit aperture through which a beam of stimulating radiation emitted by said source of stimulating radiation is directed onto said screen.

7. An apparatus according to claim 4 provided with at least one lateral planar mirror positioned at the outer ends of the cylindrical mirror.

8. An apparatus according to claim 3 wherein said means for directing light emitted by said screen upon stimulation onto said array of transducer elements comprises a lens condenser.

9. An apparatus according to claim 8 provided with two arrays of transducer elements.

10. A method of reading a radiation image that has been stored in a photostimulable phosphor screen comprising the steps of
- scanning the screen by means of stimulating radiation,
- detecting light emitted by a pixel upon stimulation by means of an array of light-to-signal transducer elements,
- generating a signal representation of a pixel of the image that has been stored in the photostimulable phosphor screen by integrating signals output by each of the elements of the transducer array in correspondence to the light emitted by said pixel.

11. A method according to claim 10 wherein said transducer elements are avalanche photodiodes.
